# EUROPEAN PATENT APPLICATION

(11) **EP 4 756 628 A1**
(43) Date of publication of application: **10.06.2026**
(21) Application number: 24218353.1
(22) Date of filing: 09.12.2024
(51) Int. Cl.: G06F 11/3668

(54) **A COMPUTER-IMPLEMENTED METHOD FOR FUZZ-TEXTING A BINARY EXECUTABLE AND GENERATING A FUZZING COVERAGE MAP**

(71) Applicant: PlaxidityX Ltd., 5252171 Ramat Gan (IL)
(72) Inventor: Lavi, Oron, 5252171 Ramat Gan (IL); Bari-Ephraim, Yael, 5252171 Ramat Gan (IL); Lazar, David, 5252171 Ramat Gan (IL); Delarea, Shaked, 5252171 Ramat Gan (IL)
(74) Representative: Aumovio Corporation

(57) **Abstract**

In order to improve fuzz-testing for binary executables, preferably in the automotive field, in the loT field and/or with regards to coverage, the invention proposes a computer-implemented method for fuzz-testing a binary executable (12) of a computer program, wherein the binary executable (12) was built involving an architecture framework, wherein the architecture framework includes at least one framework module (14, 34), the method comprising the steps: a) partitioning the binary executable (12) into binary chunks (20), wherein each binary chunk (20) contains at least one framework module (14, 34); b) fuzzing each binary chunk (20) in a virtual computing environment (22, 36); c) monitoring the behavior of the binary chunk (20) and/or the virtual computing environment (22, 36) during fuzzing, in order to identify unintended behavior.

## Description

### TECHNICAL FIELD

A computer-implemented method for fuzz-testing a binary executable of a computer program. The invention further relates to a method for generating a fuzzing coverage map of a binary executable of a computer program and a fuzzing coverage map.

### BACKGROUND

Reference is made to M. Boehme, C. Cadar and A. ROYCHOUDHURY, "Fuzzing: Challenges and Reflections," in IEEE Software, vol. 38, no. 3, pp. 79-86, May-June 2021, doi: 10.1109/MS.2020.3016773.

Fuzz testing (fuzzing) is a technique used to find vulnerabilities or bugs in compiled computer programs by feeding the program with a large number of malformed, unexpected, or random inputs.

A conventional approach is source code fuzzing, where the source code is available. This is also sometimes called white box fuzzing as the fuzz tester has full knowledge about the fuzz target. While it may require greater effort to setup and adapt the fuzzer to the source code, the payoff is typically that performance (mostly speed) is high and coverage can be determined easier so it is possible to gain large source code coverage. However, sometimes the source code may not be available which would make it impossible to fuzz-test.

A solution to this is black box fuzzing, which requires no knowledge about the fuzz target. In this approach the target application is treated as a "black box" focusing only on its inputs and outputs. The goal is to identify bugs, crashes, and vulnerabilities by feeding the application with a wide variety of malformed, unexpected, or random inputs and observing its behavior. This approach does not require access to the source code or details of the program implementation, except for its interfaces (e.g., API, network protocol, command-line input, or file format). Furthermore, the setup can be very simple as black box fuzzers require minimal configuration to interact with the external interface. This also allows for high versatility as the fuzzer can be applied to any software, including closed-source applications, binaries, and systems with proprietary code.

However, black box fuzzing has some limitations that prevent a widespread application in very security sensitive applications, such as automotive applications. In general black box fuzzer as applied to binary executables can exhibit unknown code coverage, which is generally assumed to be low, as the random inputs may often fail to exercise deeper or less accessible parts of the code. Thus, complex code paths with specific input requirements may remain untested.

Another drawback may be high redundancy, as many generated inputs may be invalid or redundant, leading to wasted computational resources. This may also contribute to computational inefficiency for particularly complex targets, as they regularly occur in automotive applications. For programs with highly structured inputs (e.g., binary protocols), random testing may not produce meaningful results.

Another drawback, in particular related to fuzzing coverage, is the limited feedback. Since no internal state or coverage information is available, it is hard if not impossible to guide the fuzzer toward unexplored areas of the program.

### SUMMARY OF THE INVENTION

It is the object of the invention to improve fuzz-testing for binary executables, preferably in the automotive field, in the loT field and/or with regards to coverage.

The object is achieved by the subject-matter of the independent claims. Preferred embodiments are subject-matter of the dependent claims.

The invention provides a computer-implemented method for fuzz-testing a binary executable of a computer program, wherein the binary executable was built involving an architecture framework, wherein the architecture framework includes at least one framework module. Executable binaries are generally obtained by compiling source code. An architecture framework allows to establish a common practice for creating, interpreting, analyzing and using framework modules within a particular domain of application. The architecture framework may be in the domain of automotive applications, for example. A common example are AUTOSAR architecture frameworks obtainable from https://www.autosar.org/. The architecture framework may contain a plurality of framework modules. Each framework module is tailored to a certain topic and includes a plurality of software functions that are typically used in that context. The framework modules are generally associated with topics like microcontroller drivers, memory drivers, cryptography services, I/O drivers, communication services, off-board communication services, runtime environments, different types of hardware abstraction, and communication drivers.

The method comprises a step a) of partitioning the binary executable into binary chunks, wherein each binary chunk contains at least one framework module. In contrast to conventional approaches, the binary executable gets partitioned into smaller binary chunks, preferably along the boundaries of framework modules. As the binary is split into chunks, a larger coverage can be achieved compared to black box fuzzing, for example. The separation and separate fuzzing of the framework modules reduces the risk of missing a framework module that is used along a more complicated code path. Thus, the partitioning of the binary executable enables not only a larger coverage but can also contribute to a more detailed information about the coverage.

The method comprises a step b) of, preferably in parallel, fuzzing each binary chunk in a virtual computing environment. Each binary chunk is fuzzed separately. Thus, it is possible to parallelize the process. While memory resources are typically ubiquitous nowadays, they are also in general of less importance to fuzz-testing than computational power and computational time. This is in particular true for the overall coverage, since it predominantly depends in the amount and/or type of test cases that are generated and processed. With this approach each binary chunk can be fuzzed with its own separate virtual computing environment. This may require marginally more computational power and memory from a (distributed) computer system. However, the advantage of being able to obtain better data about the coverage and/or the possibility of increasing the coverage while using the same or only marginally more computational resources, in particular computational time, largely outweighs the resource demand.

The method comprises a step c) of monitoring the behavior of the binary chunk and/or the virtual computing environment during fuzzing, in order to identify unintended behavior. The virtualization approach allows a detailed monitoring of the execution of the binary chunks. The virtual computing environment typically includes, but is not limited to, a virtualized CPU, RAM, and storage. While the binary chunks are executed in the virtual computing environment and sent fuzzing data, a monitoring module is able to monitor the execution by inspecting the virtual CPU (registers, ALU, etc.), the memory addresses of the RAM and/or the storage. The monitoring module may look for unintended behavior, which typically includes memory corruption or exceptions.

Preferably, the binary executable is provided in a format that includes a plurality of symbols, which indicate identifiers in the computer program, wherein at least one symbol identifies a function of the framework module, and wherein step a) includes generating the binary chunks based on analyzing the symbols and information relating to the architecture framework. An example for a suitable format is executable linkable format (ELF). The symbols may include a name of a function, its starting point and its end point, which both are memory addresses in the virtual computing environment. Furthermore, information about the architecture framework can be used to determine which functions belong to which framework module. The information relating to the architecture framework typically includes specifications, e.g. of interfaces, standardized function names, and/or other naming conventions that overall allow an association between a specific function and a specific framework module. In other words, the information relating to the architecture framework is suitable to associate functions with their respective framework modules. During partitioning this information can be used to separate the framework modules into the binary chunks.

Preferably, the architecture framework includes a first framework module which includes at least one function call to a second framework module, wherein step a) includes generating at least one binary chunk that contains both the first framework module and the second framework module. In some embodiments, two framework modules may be dependent on each other in the sense that at least one of the modules makes an external function call to another module. For example, a framework module that handles a CAN-bus interface (Canlf) calls a framework module that handles the CAN transport layer (CanTp), which in turn may call other functions in other modules. With this approach dependent modules may be partitioned into the same binary chunk so that during fuzzing the interaction between the different framework modules can be fuzz-tested and monitored. As a result, coverage and quality of the fuzz-test may be improved.

Preferably, the framework module includes at least one function call to another framework module, wherein step b) involves the virtual computing environment generating and returning a fuzzing response to the framework module in response to receiving the function call therefrom or wherein step b) involves the virtual computing environment ending the current test case. In some embodiments, it can be advantageous to isolate/separate the framework modules from each other. The external function call is then handled by the virtual computing environment. Different options are possible, such as just aborting the test case. However, an improved version is that the virtual computing environment sends back a fuzzing response to test how the return of the external function call is processed by the framework module under inspection.

Preferably, the virtual computing environment includes a harness, and in step b) fuzzing involves a fuzzer generating fuzzing data and the harness writing the fuzzing data to at least one memory area of the virtual computing environment, wherein the binary chunk, preferably a function contained therein, receives the fuzzing data by accessing that memory area. In some embodiments, the fuzzer should not be applied to the binary chunk directly in order to reduce redundant or invalid test cases. Instead the fuzzer generates fuzzing data in its usual manner that is translated by the harness into a format that ensures the fuzzing data can be processed by the framework module. Generally the harness may need to be implemented manually, however, the implementation may be supported by analyzing the specification of the architecture framework. The harness translates the fuzzing data by converting it in to a format that conforms to the function calls of the framework module and writing the converted fuzzing data into a memory region that is accessed by the binary chunk during its execution while fuzzing.

Preferably, in step c) the monitoring involves monitoring a memory, a CPU register, and/or a storage for the virtual computing environment for memory corruption as the unintended behavior. While certain behavior may be unintended, e.g., due to a clerical error or typo in the source code, such behavior may not constitute a cybersecurity issue. Memory corruption on the other hand may have serious cybersecurity implications. Memory corruptions occurs when a program accidentally modifies memory contents in unintended ways, leading to unpredictable behavior, crashes, or security vulnerabilities. Common types of memory corruption include but are not limited to buffer overflow, buffer underflow, use-after-free, double free, dangling pointer dereference, stack overflow, stack underflow, invalid memory access, out-of-bounds access, memory leak, overlapping memory operations, uninitialized memory access, invalid memory alignment, integer overflow/underflow leading to memory corruption, heap corruption, format string vulnerabilities, race conditions on memory access, wild pointer dereference, pointer arithmetic errors, overlapping structure or memory mapping corruption, stack-smashing attacks, type confusion, and invalid free or reallocation.

Buffer overflow occurs, when writing data beyond the allocated boundary of a buffer, thereby overwriting adjacent memory. Buffer underflow occurs, when writing or reading data before the beginning of a buffer. Use-after-free occurs, when accessing memory after it has been freed (deallocated). Double free occurs, when freeing the same block of memory more than once. Dangling pointer dereference occurs, when accessing memory via a pointer that no longer points to a valid memory location (e.g., after a free operation). Stack overflow occurs, when exceeding the stack space by recursive calls or large allocations. Stack underflow occurs, when erroneously popping more data from the stack than was pushed, leading to corruption. Invalid memory access occurs, when accessing memory that is not allocated or is otherwise inaccessible. Out-of-bounds access occurs, when accessing memory outside the bounds of an allocated array or structure. A memory leak occurs, when failing to free memory that is no longer needed, leading to resource exhaustion. Overlapping memory operations occur, when overlapping memory regions are used in memory copy or move operations without proper handling. Uninitialized memory access occurs, when using memory without initializing it first. Invalid memory alignment occurs, when accessing memory at an address that is not properly aligned for the data type. Integer overflow/underflow occurs when integer arithmetic errors result in incorrect memory allocation or indexing. Heap corruption occurs due to any corruption of the heap metadata (e.g., due to buffer overflow or misuse of heap management functions). Format string vulnerabilities occur with improper use of formatted output functions (e.g., 'printf') to overwrite memory. Race conditions on memory access occur due to concurrent access to shared memory without proper synchronization. Wild pointer dereference occurs, when using a pointer that has not been properly initialized or has been corrupted. Pointer arithmetic errors occur due to incorrect arithmetic operations on pointers leading to invalid memory addresses. Overlapping structure or memory mapping corruption occurs due to overlapping memory regions due to improper mapping or shared usage. Stack-smashing attacks allow exploitation of buffer overflows on the stack to overwrite control flow data like return addresses. Type confusion occurs by treating memory as one type when it was allocated or intended as another. Invalid free or reallocation occurs, when freeing memory that was never allocated or reallocating memory inappropriately. These memory corruption types generally represent critical challenges in program development and cybersecurity. Finding such issues requires careful analysis of the program execution, in particular monitoring the memory and instruction execution.

Preferably, in step c) the monitoring involves monitoring the execution of the binary chunk for raising of an exception as the unintended behavior. While memory corruption is something occurring in the memory of the physical or virtual machine, exceptions are typically issues occurring during execution of an instruction. The exception can be raised by the program logic or be built in to the CPU. The typical example is division by zero. Similarly, such occurrences may be monitored in order to ensure the detection of unintended behavior.

Preferably, step c) includes identifying unintended behavior by generating an unintended behavior list that includes at least information relating to which memory address unintended behavior occurred at and the fuzzing data that caused the unintended behavior, and by determining at the instruction-level which instruction was executed, when the unintended behavior occurred. Due to the execution of the binary chunk in the virtual computing environment it is possible to identify the unintended behavior at the instruction-level. This is typically impossible with conventional black box fuzzing of binaries as there is no possibility to "look inside" the execution. If unintended behavior occurs, basically the internal state of the virtual computing environment (memory trace, CPU registers, etc.) is recorded. It is also possible to record previous instructions and whether they executed properly.

Preferably, the method further comprises a step d) of determining and/or recording a fuzzing coverage of the binary executable based on the monitoring of step c). Preferably, in step d) the fuzzing coverage is determined and/or recorded in an instruction-level by generating a fuzzing coverage map that includes at least information relating to which instruction(s) of the at least one framework module or functions thereof are/were executed at least once during fuzzing. The previously described embodiments of the method allow the recordal of the fuzzing coverage, as the execution of the binary can be observed and monitored on the instruction-level. In addition, together with the information about the architecture framework, the coverage can be determined in even further detail, as the skipped functions are known.

The invention provides a computer-implemented method for generating a fuzzing coverage map of a binary executable of a computer program, wherein the binary executable was built involving an architecture framework, wherein the architecture framework includes at least one framework module, the method comprising the steps:
a) partitioning the binary executable into binary chunks, wherein each binary chunk contains at least one framework module;
b) fuzzing each binary chunk in a virtual computing environment;
c) monitoring the behavior of the binary chunk and/or the virtual computing environment during fuzzing; and
d) determining and/or recording a fuzzing coverage of the binary executable based on the monitoring of step c). Another aspect of the disclosure is the determination and generation of a coverage map for binary executables on an instruction-level. So far, binary coverage maps could not be determined as the entire binary is fuzz-tested and there is no feedback on coverage due to the binary generally being a black box.

Preferably, in step d) the fuzzing coverage is determined and/or recorded in an instruction-level by generating a fuzzing coverage map that includes at least information relating to which instruction(s) of the at least one framework module or functions thereof are/were executed at least once during fuzzing. With the previously described methods, it is possible to generate a fuzzing coverage map on the instruction-level, which - to the best knowledge of inventor(s) and applicant - was previously not possible.

The invention provides a computer program that contains instructions that upon execution by a computer system or distributed computer system cause the system to carry out a previously described method.

The invention provides a computer system or a distributed computer system that comprises means that are configured for carrying out a previously described method or that comprises means storing the computer program.

The invention provides a non-volatile machine-readable data carrier or a data carrier signal that includes the computer program.

The invention provides a fuzzing coverage map of a binary executable, wherein the coverage map has instruction-level information about fuzzing coverage of the binary executable or the fuzzing coverage map is obtainable by a previously described method.

In this disclosure, the fuzzing of binaries is focused on the ability to determine fuzzing coverage in the binary as well as making fuzz-testing more computationally efficient, i.e., enabling a greater coverage and better information about the coverage with less computational resources. These ideas make fuzzing more accessible and effective at uncovering hidden vulnerabilities in compiled software, where no source code is available.

In some embodiments a method for testing a binary executable created in the AUTOSAR framework/standards is provided in order to identify security weaknesses and vulnerabilities. The issue is that OEMs in the automotive field may receive compiled AUTOSAR executables from their suppliers, but may struggle to ensure the code meets cybersecurity requirements without access to the source code. Without the approach disclosed herein, tests can only be performed as black box on the software deployed in an emulator or actual hardware which makes testing complex, with no indication of actual coverage. Additionally, the method of testing actual hardware is limited in performance to a single running setup at a time.

The disclosed method allows for faster testing, as it is not bound to hardware limitations in the sense that the actual hardware that is built into automobiles is required. Furthermore, the complexity can be reduced as said specific hardware is not required for testing. As a big advantage, the method has the ability to calculate coverage on an instruction-level, which is unprecedented. There is also no need for the source code; as long as the implementation follows a known framework (e.g., AUTOSAR), the binary can be analyzed in the described manner.

Automotive tier 1 manufacturers are required to perform fuzzing tests as part of their cybersecurity testing. Today, setting up a fuzzing environment is typically done in two ways.

One approach is source code fuzzing, which involves compiling the code with a dedicated compiler which inserts dedicated checks to monitor execution. Automotive makers often do not have the entire source code available so some third party modules cannot be covered by the fuzzing tests.

Another approach is black box interface fuzzing, where the software is flashed to an actual hardware ECU and once it is live, an external fuzz tester generates random data to dedicated interfaces and monitors for undefined behavior and/or system crashes. This approach has no data about the coverage of each fuzzing campaign and detecting crashes or misbehavior of the system is not trivial as their underlying implementations may vary.

In some embodiments the method comprises receiving a binary AUTOSAR executable as it is generated by a compiler in an ELF format. In some embodiments, the executable is scanned for known AUTOSAR modules which it contains. In some embodiments a memory map is generated which describes for each module where a function starts and ends (i.e. the respective memory addresses). In some embodiments a virtual microcontroller is prepared which will emulate the desired AUTOSAR module (initialize stack, system and general-purpose registers and such). In some embodiments the entry point of a desired AUTOSAR module is emulated and fed with random fuzzing data over repeated runs. In some embodiments the behavior of the virtual microcontroller is monitored to detect memory corruptions or other undefined behaviors based on predefined checks. In some embodiments the execution is monitored to generate a coverage map at the instruction-level.

It is an idea that a solution for coverage-guided fuzzing of standardized computer programs is provided based on emulation and analyzing of the documents describing the module software environment. The solution may be created based on documentation or a known framework in which the program is created. In some embodiments the solution may require only a binary in an ELF format, containing function symbols. In some embodiments the solution can be effective for cases when source code is not available. In some embodiments the solution has better performance than fuzzing an actual hardware through external interfaces.

In some embodiments the method involves automatically finding code segments that are part of a specific module(s) targeted for testing. The boundaries of each module may be identified, preferably based on function calls and/or code flow. In some embodiments an emulating environment is automatically set up, and the environment can execute the code segment independently, and does not execute the entire executable. In some embodiments a harness is automatically set up, and the harness involves needed parameters and input definitions required for executing the code segment, based on prior familiarity with the framework used in obtaining executable and the framework architecture. In some embodiments the method dynamically tracks which code is being executed, which branches are taken, and calculates the coverage (map). In some embodiments the method repeatedly modifies inputs and parameters while performing re-execution of the code segments and tracking of coverage until sufficient coverage is achieved. In some embodiments the method documents and reports any memory corruptions or unexpected behavior during execution. In some embodiments the method involves initializing predefined configurations that are specifically made to each module that needs to be tested, according to the framework in which they were implemented in. In some embodiments the configurations include required global variables, function parameters, function call flow, and the like.

### BRIEF DESCRIPTION OF THE DRAWINGS

Embodiments of the invention are described in more detail with reference to the accompanying schematic drawings.
Fig. 1 depicts a first embodiment of a computing system executing a method according to the invention;
Fig. 2 depicts the computing system at a partitioning step;
Fig. 3 depicts the computing system at a fuzzing and monitoring step;
Fig. 4 depicts a second embodiment of a computer system executing a fuzzing and monitoring step;
Fig. 5 depicts a third embodiment of a computer system executing a fuzzing and monitoring step;
Fig. 6 depicts a fourth embodiment of a computer system executing a fuzzing and monitoring step;
Fig. 7 depicts a fifth embodiment of a computer system executing a fuzzing and monitoring step;
Fig. 8 depicts an embodiment of a method according to the invention;
Fig. 9 illustrates an embodiment of a coverage map; and
Fig. 10 illustrates an embodiment of a crash report.

### DETAILED DESCRIPTION OF EMBODIMENT

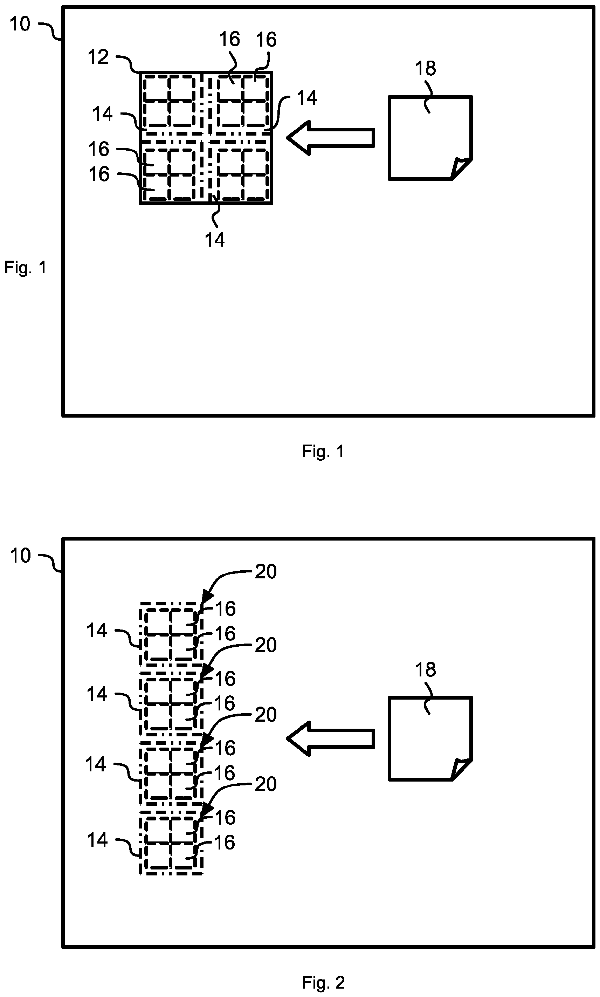

Referring to Fig. 1, a computing system 10 is schematically depicts. A binary executable 12 is loaded into the computing system 10. The binary executable 12 is in executable linkable format (ELF). The binary executable 12 is compiled from an architecture framework, such as AUTOSAR architecture framework. The binary executable 12 includes a plurality of framework modules 14. Each framework module 14 is designed to perform a specific task within the architecture framework. Each framework module 14 can be seen as a collection of a plurality of functions 16 that are implemented to contribute in performing the specific task. The ELF includes symbols, which identify each function 16 by name, its starting address in memory and its end address in memory.

In addition to the binary executable 12, a specification 18 of the architecture framework is loaded onto the computing system 10. The specification 18 contains information relating to the architecture network. The specification 18 may include standardized function names and/or standardized prefixes for the functions 16 and possible associations of the functions 16 with the framework modules 14.

Referring to Fig. 2, the binary executable 12 is partitioned into a plurality of binary chunks 20 such that each binary chunk 20 contains one framework module 14. The partitioning is done following the boundaries of each framework module 14 using the symbols and the specification 18.

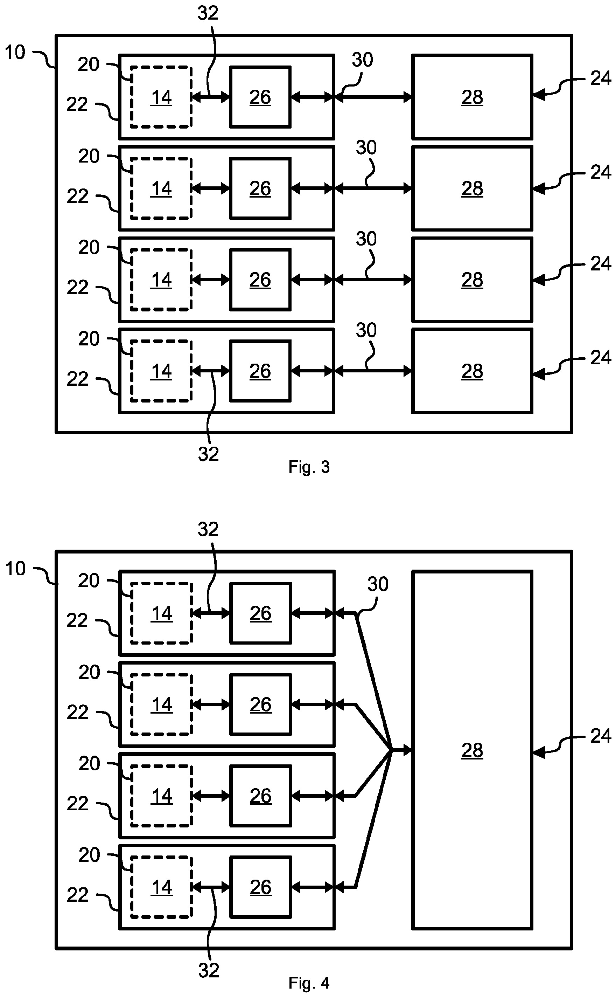

Referring to Fig. 3, a plurality of virtual computing environments 22 and an equal amount of fuzzers 24 are set up in the computing system 10. The virtual computing environments 22 can be set up with QEMU and the fuzzers 24 can be set up with AFL++.

Each virtual computing environment 22 includes a harness 26 and receives one binary chunk 20 to execute it. The harness 26 acts as an intermediary between the binary chunk 20 and the fuzzer 24. Furthermore, the fuzzer 24 also includes an inspection module 28. The inspection module 28 monitors the virtual computing environment 22.

The fuzzer 24 generates fuzzing data 30 that is fed to the virtual computing environment 22, where the fuzzing data 30 are received by the harness 26. The harness 26 translates the fuzzing data 30 into a suitable format to be processed by an entry function of the binary chunk 20 and writes the translated fuzzing data 32 into a memory portion that is accessible and accessed by the binary chunk 20 while being executed.

During fuzzing the execution of the binary chunk 20 is monitored by the inspection module 28. The inspection module 28 specifically monitors the virtual memory, virtual CPU and virtual storage of the virtual computing environment 22. The inspection module 28 records the fuzzing data 30 or translated fuzzing data 32, the state of the virtual computing environment 22. In particular, the inspection module 28 monitors the virtual computing environment 22 for memory corruption or exceptions raised during execution of the binary chunk 20.

As the inspection module 28 can monitor the virtual computing environment 22 it is possible to record on an instruction-level, whether the instruction executed successfully or caused unintended behavior (memory corruptions or exceptions) and if so, which fuzzing data 30 caused the unintended behavior.

Referring to Fig. 4, the configuration is similar to the previous embodiment. The embodiment differs in that only one fuzzer 24 and corresponding inspection module 28 are set up on the computing system 10.

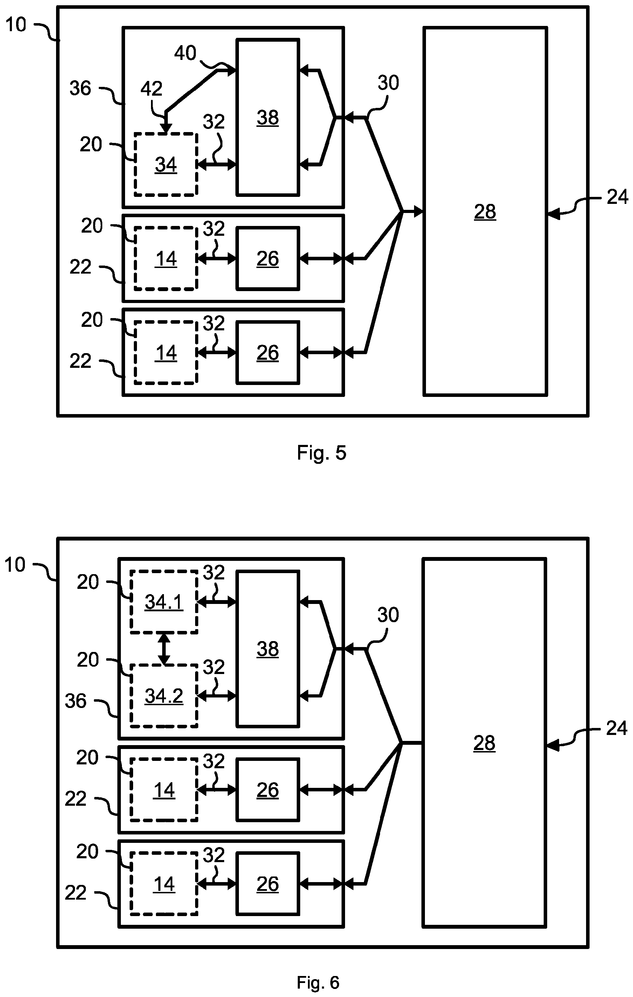

Referring to Fig. 5, the configuration is similar to the previous embodiments. In this embodiment, a specific framework module 34 is loaded into a specific virtual computing environment 36 with a specific harness 38. The specific framework module 34 includes at least one function 16 that has an external function call 40 to another framework module 14. The specific harness 38 is adapted to receive the external function call 40 and process it by generating a random fuzzing response 42 from the fuzzing data 30 received by the specific harness 38.

Referring to Fig. 6, the configuration is similar to the previous embodiment. In this embodiment, a specific first framework module 34.1 and a specific second framework module 34.2 are loaded into the virtual computing environment 36. The first framework module 34.1 again has the external function call 40 that is now directed to a function 16 of the second framework module 34.2. Thus instead of generating a random fuzzing response 42, the first and second framework modules 34.1, 34.2 work together as they would outside the testing environment during deployment.

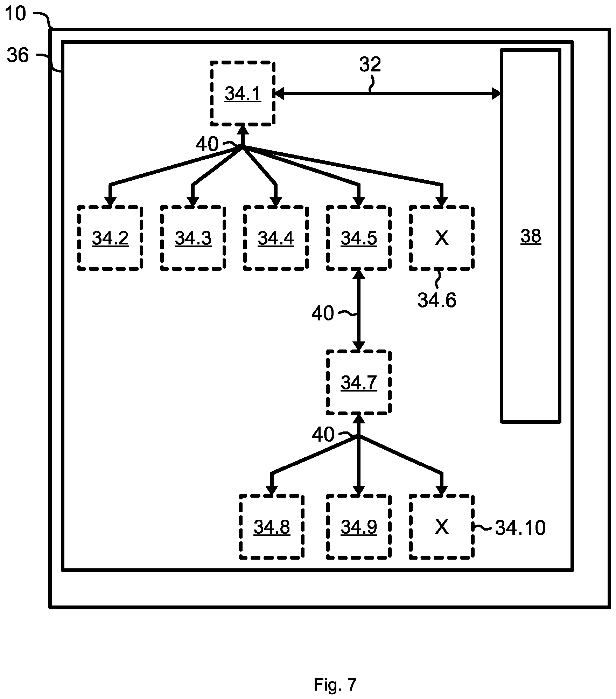

Referring to Fig. 7, a more complex configuration is illustrated. In this embodiment, the binary chunk 20 includes a first to tenth framework module 34.1, 34.2, ..., 34.10. The fuzzer 24 (omitted in this figure for clarity) sends the fuzzing data 30 to the harness 38 and the inspection module 28 (also omitted) monitors the virtual computing environment 22. The harness 38 generates the translated fuzzing data 32 from the fuzzing data 30 it receives and provides them to the entry function 16 of the first framework module 34.1. The first framework module 34.1 has multiple external function calls 40 to the second to sixth framework module 34.2, 34.3, ..., 34.6, which may respond according to the received data. The fifth framework module 34.5 has an external function call 40 to the seventh framework module 34.7, which in turn may have multiple external function calls 40 to the eighth through tenth framework module 34.8, 34.9, 34.10.

As indicated by the letter "X", the sixth and tenth framework module 34.6, 34.10 exhibit unintended behavior, e.g., due to memory corruption or raising an exception. This is monitored by the inspection module 28, which constantly monitors the execution of the binary chunk 20 on an instruction-level by monitoring the virtual computing environment 22, specifically its virtual memory (stack, heap, etc.), its virtual CPU (the registers and caches), and/or the virtual storage. The inspection module 28 can then record the instructions which were executed at least once, whether they executed successfully and which fuzzing data 30 or translated fuzzing data 32 caused the unintended behavior. As a result the inspection module 28 can generate an instruction-level coverage map 44 of the binary chunk 20 and ultimately of the entire binary executable 12.

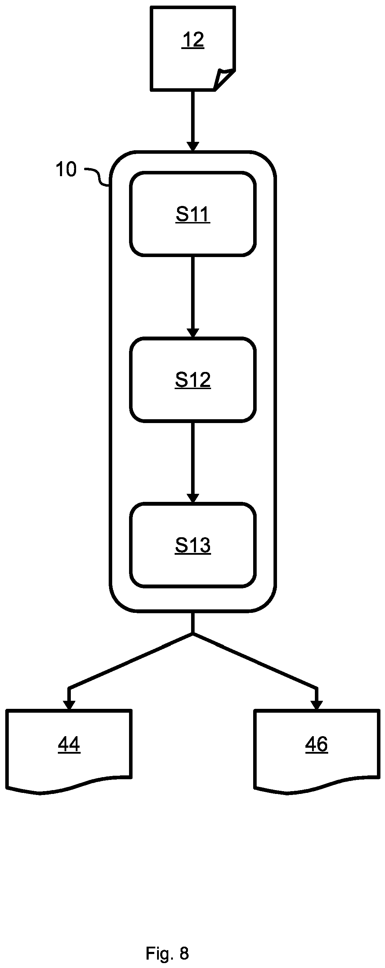

Referring now to Fig. 8, a method for fuzz-testing is described in more detail. The binary executable 12 is provided and loaded onto the computing system 10 which performs the fuzz-test.

In a first step S11, the fuzzer 24 partitions the binary executable 12 into binary chunks 20 along the boundaries of its framework modules 14, with each binary chunk 20 containing at least one framework module 14, 34, 34.1, ..., 34.10. The partitioning can be done according to any of the previously described configurations.

In a second step S12, the fuzzer 24 sets up the virtual computing environment(s) 22 and loads both the binary chunks 20 and harnesses 26, 38 onto the virtual computing environment(s) 22 according to any of the configurations described previously.

In a third step S13, the fuzzer 24 generates fuzzing data 30 that are translated by the harness 26, 38 into translated fuzzing data 32 that are written to memory regions of the virtual computing environment 22, which are accessible and are accessed by the functions 16, specifically by the entry functions.

During fuzzing, the inspection module 28 monitors the virtual computing environment 22 and generates the instruction-level coverage map 44. The coverage map 44 includes information about which instruction was executed at least once during fuzzing. In addition, the inspection module 28 may generate a crash report 46. The crash report 46 may include a full stack trace or other information about whether and which instruction executed successfully or caused unintended behavior of the binary chunk 20 and which fuzzing data 30 or translated fuzzing data 32 caused the unintended behavior.

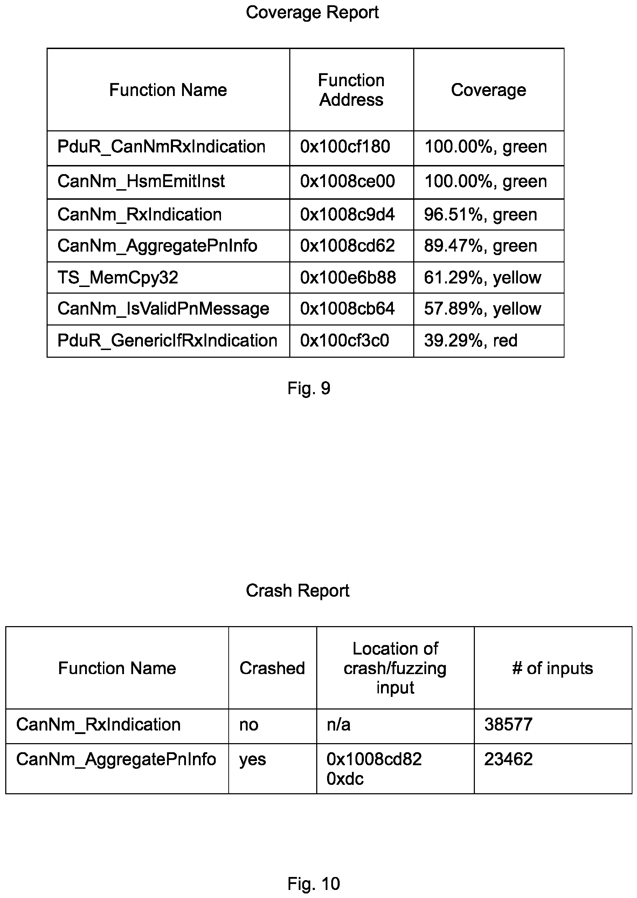

Referring to Fig. 9, the instruction-level coverage map 44 is illustrated in more detail. The coverage map 44 may be in the format of a coverage report, which is a list that includes a function name of the functions 16, which were fuzz-tested, the function starting address in memory, and a coverage value, which indicates as a percentage how many instructions of the respective function were executed at least once. It should be noted that while in this embodiment only the coverage value is presented, this is only possible due to the instruction-level monitoring according to the invention, which is much more detailed as described above.

As can be seen from the example results, the first and second function were completely covered by the fuzz-test. The third and fourth function were covered extensively and with much greater coverage to conventional binary fuzzing methods. The fifth to seventh function exhibit comparatively low coverage indicating that further fuzz-testing or a modification of the test setup is necessary to increase the coverage. It should be noted that with conventional fuzzing techniques this information is not available.

Referring to Fig. 10, an embodiment of the crash report 46 is illustrated. The crash report 46 may again be in the form of a list, that includes the function name, a flag indicating whether the function has crashed, the memory location of the crash (which corresponds to a specific machine instruction) and the fuzzing data 30 or the translated fuzzing data 32 which caused it, and a number of inputs that were tested.

### REFERENCE SIGNS

10 computing system
12 binary executable
14 framework module
16 function
18 specification (information relating to the architecture framework)
20 binary chunk
22 virtual computing environment
24 fuzzer
26 harness
28 inspection module
30 fuzzing data
32 translated fuzzing data
34 framework module
36 virtual computing environment
38 harness
40 external function call
42 random fuzzing response
44 coverage map
46 crash report

## Claims

1. A computer-implemented method for fuzz-testing a binary executable (12) of a computer program, wherein the binary executable (12) was built involving an architecture framework, wherein the architecture framework includes at least one framework module (14, 34), the method comprising the steps:
a) partitioning the binary executable (12) into binary chunks (20), wherein each binary chunk (20) contains at least one framework module (14, 34);
b) fuzzing each binary chunk (20) in a virtual computing environment (22, 36);
c) monitoring the behavior of the binary chunk (20) and/or the virtual computing environment (22, 36) during fuzzing, in order to identify unintended behavior.

2. The method of claim 1, wherein the binary executable (12) is provided in a format that includes a plurality of symbols, which indicate identifiers in the computer program, wherein at least one symbol identifies a function (16) of the framework module (14, 34), and wherein step a) includes generating the binary chunks (20) based on analyzing the symbols and information relating to the architecture framework.

3. The method of any of the preceding claims, wherein the architecture framework includes a first framework module (14, 34) which includes at least one function call to a second framework module (14, 34), wherein step a) includes generating at least one binary chunk (20) that contains both the first framework module and the second framework module (14, 34).

4. The method of any of the preceding claims, wherein the framework module (14, 34) includes at least one function call to another framework module (14, 34), wherein step b) involves the virtual computing environment (22, 36) generating and returning a fuzzing response to the framework module (14, 34) in response to receiving the function call therefrom or wherein step b) involves the virtual computing environment (22, 36) ending the current test case.

5. The method of any of the preceding claims, wherein the virtual computing environment (22, 36) includes a harness (26, 38), and in step b) fuzzing involves a fuzzer (24) generating fuzzing data (30) and the harness (26, 38) writing the fuzzing data (30) to at least one memory area of the virtual computing environment (22, 36), wherein the binary chunk (20), preferably a function (16) contained therein, receives the fuzzing data (30) by accessing that memory area.

6. The method of any of the preceding claims, wherein in step c) the monitoring involves monitoring a memory, a CPU register, and/or a storage for the virtual computing environment (22, 36) for memory corruption as the unintended behavior, and/or wherein in step c) the monitoring involves monitoring the execution of the binary chunk (20) for raising of an exception as the unintended behavior.

7. The method of any of the preceding claims, wherein step c) includes identifying unintended behavior by generating an unintended behavior list that includes at least information relating to which memory address unintended behavior occurred at and the fuzzing data (30) that caused the unintended behavior, and by determining at the instruction-level which instruction was executed, when the unintended behavior occurred.

8. The method of any of the preceding claims, further comprising a step d) of determining and/or recording a fuzzing coverage of the binary executable (12) based on the monitoring of step c).

9. The method of claim 8, wherein in step d) the fuzzing coverage is determined and/or recorded in an instruction-level by generating a fuzzing coverage map that includes at least information relating to which instruction(s) of the at least one framework module (14, 34) or functions (16) thereof are/were executed at least once during fuzzing.

10. A computer-implemented method for generating a fuzzing coverage map of a binary executable (12) of a computer program, wherein the binary executable (12) was built involving an architecture framework, wherein the architecture framework includes at least one framework module (14, 34), the method comprising the steps:
a) partitioning the binary executable (12) into binary chunks (20), wherein each binary chunk (20) contains at least one framework module (14, 34);
b) fuzzing each binary chunk (20) in a virtual computing environment (22, 36);
c) monitoring the behavior of the binary chunk (20) and/or the virtual computing environment (22, 36) during fuzzing; and
d) determining and/or recording a fuzzing coverage of the binary executable (12) based on the monitoring of step c).

11. The method of claim 10, wherein in step d) the fuzzing coverage is determined and/or recorded in an instruction-level by generating a fuzzing coverage map that includes at least information relating to which instruction(s) of the at least one framework module (14, 34) or functions (16) thereof are/were executed at least once during fuzzing.

12. A computer program that contains instructions that upon execution by a computer system or distributed computer system cause the system to carry out a method of any of the claims 1 to 11.

13. A computer system or a distributed computer system that comprises means that are configured for carrying out a method of any of the claims 1 to 11 or that comprises means storing the computer program of claim 12.

14. A non-volatile machine-readable data carrier or a data carrier signal that include the computer program of claim 12.

15. A fuzzing coverage map of a binary executable (12), c h a ract e r i zed in that the coverage map has instruction-level information about fuzzing coverage of the binary executable (12) or the fuzzing coverage map is obtainable by a method of any of the claims 8 to 11.
